# EUROPEAN PATENT APPLICATION

(11) **EP 2 544 076 A2**
(43) Date of publication of application: **09.01.2013**
(21) Application number: 12161010.9
(22) Date of filing: 23.03.2012
(51) Int. Cl.: G06F 3/041

(54) **Touch screen panel liquid crystal display device**

(30) Priority: 07.07.2011 KR 20110067197
(71) Applicant: Samsung Electronics Co., Ltd., Suwon-si, Gyeonggi-do, 443-742 (KR)
(72) Inventor: Kang, Jin Goo, Gyeonggi-do (KR); Kim, Hak Yeol, Gyeonggi-do (KR); Lee, Kyung Min, Gyeonggi-do (KR); Lee, Im Sung, Gyeonggi-do (KR); Kim, Jung Won, Gyeonggi-do (KR)
(74) Representative: Jenkins, Richard Gavin

(57) **Abstract**

A Touch Screen Panel (TSP) Liquid Crystal Display (LCD) device for reducing LCD noise measured in a TSP is provided. The TSP LCD device includes a ground line along an edge of an Indium Tin Oxide (ITO) layer formed in a shield layer for grounding the ITO layer. With this arrangement, a resistance value difference according to a position of the ITO layer can be minimized. Accordingly, an LCD noise shield function can be improved.

## Description

### BACKGROUND OF THE INVENTION

### 1. Field of the Invention:

The present invention relates to a Touch Screen Panel (TSP) Liquid Crystal Display (LCD) device. More particularly, the present invention relates to a TSP LCD device for reducing LCD noise measured in a TSP.

### 2. Description of the Related Art:

Nowadays, in order to enlarge a display area while reducing weight and thickness, a TSP display device is often used in a mobile terminal. A TSP display device may include an Active Matrix Organic Light Emitting Diode (AMOLED) or an LCD, and an inexpensive LCD is frequently used. However, an LCD produces a large amount of noise and thus research for shielding the LCD noise has been performed.

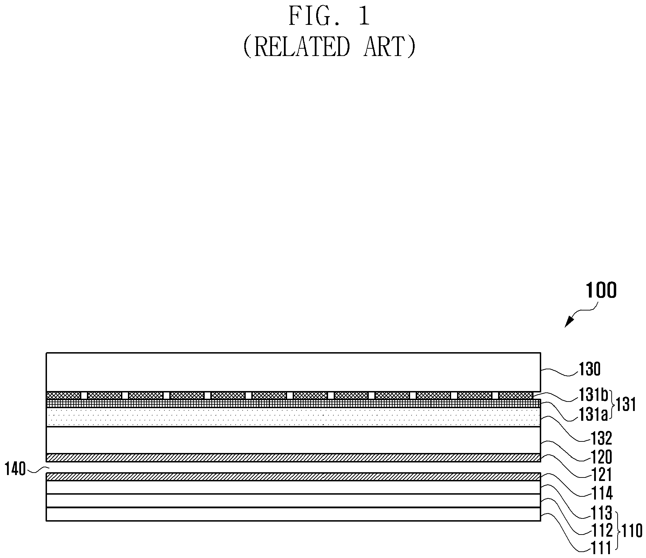

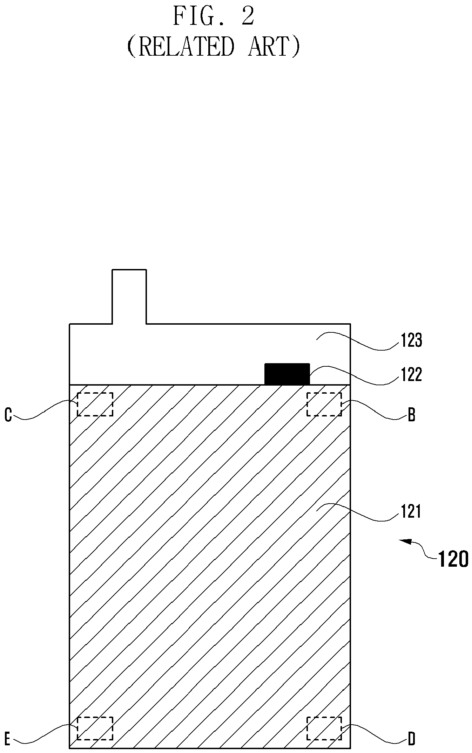

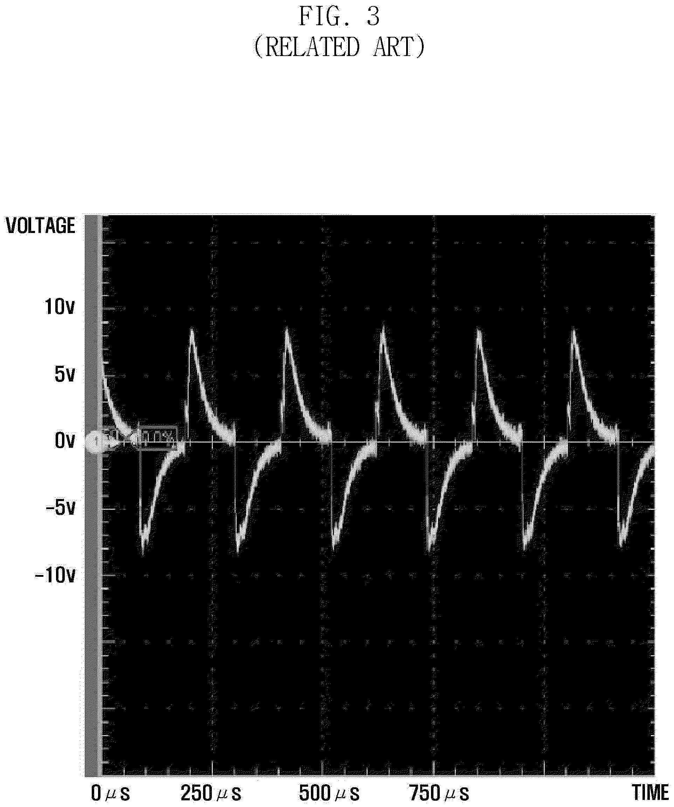

FIG. 1 is a cross-sectional view illustrating a TSP LCD device according to the related art, FIG. 2 is a bottom view illustrating a shield layer in the TSP LCD device of FIG. 1 according to the related art, and FIG. 3 is a graph illustrating LCD noise measured at a TSP sensor pattern in the TSP LCD device of FIG. 1 according to the related art. For reference, in a TSP LCD device 100 of FIG. 1, a TSP X sensor pattern 131a and a TSP Y sensor pattern 131b are formed in a lower surface of a window 130. Further, a horizontal axis of the graph shown in FIG. 3 represents a time of 50.0 µs per scale, and a vertical axis thereof represents a voltage of 1.0V per scale.

Referring to FIGs. 1 to 3, the TSP LCD device 100 includes an LCD 110, a shield layer 120 disposed at an upper part of the LCD 110, and a window 130 disposed at an upper part of the shield layer 120. The LCD 110 includes a thin film transistor layer 111, a liquid crystal layer 112 disposed at an upper part of the thin film transistor layer 111, and a color filter layer 113 disposed at an upper part of the liquid crystal layer 112. A TSP sensor pattern 131 including the TSP X sensor pattern 131a and the TSP Y sensor pattern 131b is formed in a lower surface of the window 130, and the window 130 and the shield layer 120 are attached by an Optically Clear Adhesive (OCA) 132.

Because the TSP X sensor pattern 131a and the TSP Y sensor pattern 131b are adjacent, the TSP LCD device 100 has a significant influence on LCD noise. Therefore, as shown in FIG. 2, a shield layer 120 formed in a lower surface of an Indium Tin Oxide (ITO) layer 121 grounded through a Flexible Printed Circuit Board (FPCB) bonding portion 122 of a touch screen FPCB 123 is positioned at a lower part of the TSP sensor pattern 131 in order to shield LCD noise. Based on its proximity, there is a relatively low resistance from the FPCB bonding portion 122 to a corner B. In comparison, the resistance to corners C, D, and E, which are further from the FPCB bonding portion 122 than is corner B, is higher than the resistance from the FPCB bonding portion 122 to the corner B. Therefore, because grounding is not performed well at the corners C, D and E, which, in comparison to corner B, are far from the FPCB bonding portion 122, an amplitude of LCD noise becomes ± 9V and a function of shielding LCD noise is deteriorated, as shown in FIG. 3.

Further, in order to protect the device from an ElectroStatic Discharge (ESD), an ITO layer 114 grounded through an FPCB bonding portion (not shown) of an LCD FPCB (not shown) is formed in an upper surface of the color filter layer 113. However, the ITO layer 114 is not grounded well at corners that are relatively far away from the FPCB bonding portion, similarly to the ITO layer 121 formed in a lower surface of the shield layer 120. Therefore, although an ESD shield function is sufficient, a limitation exists in shielding LCD noise.

Further, in order to ground the ITO layer 114, the ITO layer 114 formed in an upper surface of the color filter layer 113 requires an additional process and material for connecting the ITO layer 114 and the LCD FPCB. Therefore, a production cost increases, and, due to failures that may occur in the process, a failure ratio increases.

### SUMMARY OF THE INVENTION

Aspects of the present invention are to address at least the above-mentioned problems and/or disadvantages and to provide at least the advantages described below. Accordingly, an aspect of the present invention is to provide a Touch Screen Panel (TSP) Liquid Crystal Display (LCD) device that can improve an LCD noise shield function of an Indium Tin Oxide (ITO) layer of a shield layer or an ITO layer of an LCD for use in the TSP LCD device.

Another aspect of the present invention is to provide a TSP LCD device that can connect an ITO layer of an LCD to ground using only improved material without an additional processing step upon performing a Super View Resin (SVR) operation.

In accordance with an aspect of the present invention, a TSP LCD device is provided. The TSP LCD device includes a window disposed at an upper part of an LCD, one or more Indium Tin Oxide (ITO) layer disposed between the LCD and the window, and a ground line contacting the one or more ITO layer located along an edge of the one or more ITO layer for grounding the one or more ITO layer.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a cross-sectional view illustrating a conventional Touch Screen Panel (TSP) Liquid Crystal Display (LCD) device according to the related art;

FIG. 2 is a bottom view illustrating a shield layer in the TSP LCD device of FIG. 1 according to the related art;

FIG. 3 is a graph illustrating LCD noise measured at a TSP sensor pattern in the TSP LCD device of FIG. 1 according to the related art;

FIG. 4 is a plan view illustrating a mobile terminal having a TSP LCD device according to an exemplary embodiment of the present invention;

FIG. 5 is a cross-sectional view illustrating a TSP LCD device according to a first exemplary embodiment of the present invention taken along line A-A' of FIG. 4;

FIG. 6 is a bottom view illustrating a shield layer in the TSP LCD device of FIG. 5 according to an exemplary embodiment of the present invention;

FIG. 7 is a graph illustrating LCD noise measured at a TSP sensor pattern of the TSP LCD device of FIG. 5 according to an exemplary embodiment of the present invention;

FIG. 8 is a cross-sectional view illustrating a TSP LCD device according to a second exemplary embodiment of the present invention taken along line A-A' of FIG. 4;

FIG. 9 is a plan view illustrating an LCD in the TSP LCD device of FIG. 8 according to an exemplary embodiment of the present invention;

FIG. 10 is a cross-sectional view illustrating a TSP LCD device according to a third exemplary embodiment of the present invention taken along line A-A' of FIG. 4; and

FIG. 11 is a plan view illustrating an LCD in the TSP LCD device of FIG. 10 according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to their bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

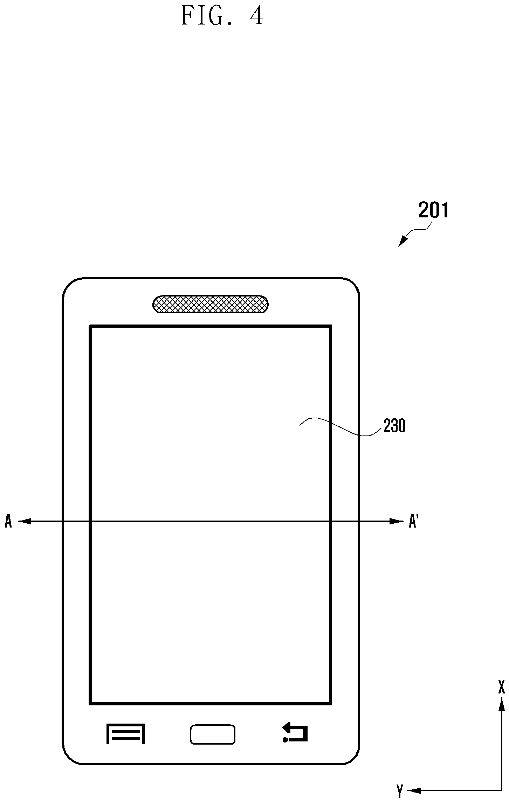

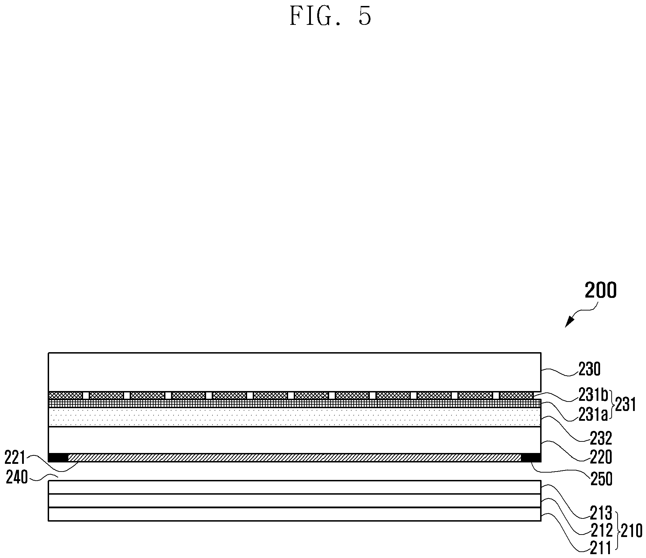

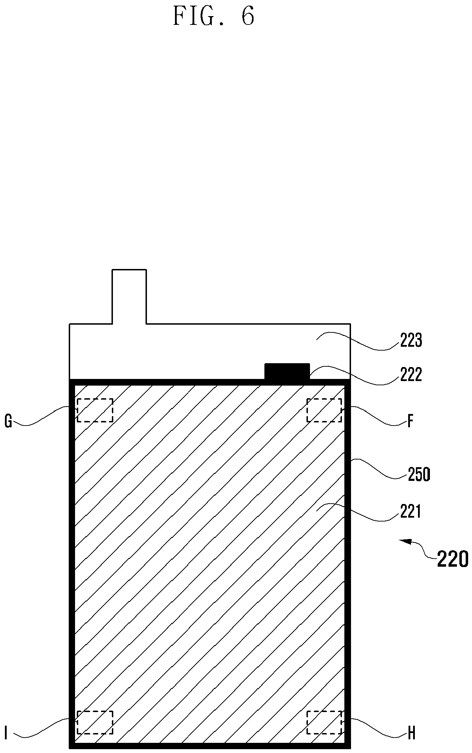

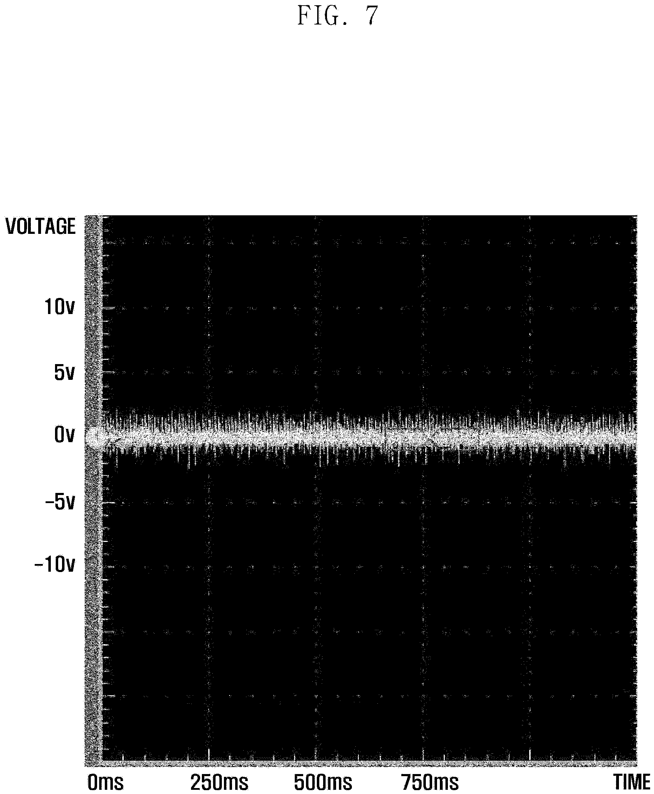

FIG. 4 is a plan view illustrating a mobile terminal having a Touch Screen Panel (TSP) Liquid Crystal Display (LCD) device according to an exemplary embodiment of the present invention, FIG. 5 is a cross-sectional view illustrating a TSP LCD device according to a first exemplary embodiment of the present invention taken along line A-A' of FIG. 4, FIG. 6 is a bottom view illustrating a shield layer in the TSP LCD device of FIG. 5 according to an exemplary embodiment of the present invention, and FIG. 7 is a graph illustrating LCD noise measured at a TSP sensor pattern in the TSP LCD device of FIG. 5 according to an exemplary embodiment of the present invention. For reference, a line A-A' shown in FIG. 4 passes through a window 230 of a mobile terminal 201 in a Y-axis direction. Further, a horizontal axis of a graph shown in FIG. 7 represents a time of 50.0ms per scale, and a vertical axis thereof represents a voltage of 1.0V per scale.

Referring to FIGs. 4 to 7, a TSP LCD device 200 includes an LCD 210, a window 230, and a shield layer 220.

The LCD 210 is a display module for displaying a desired image by changing a transmission form of light applied from a backlight unit (not shown) according to an electric stimulus applied to a liquid crystal layer 212. The LCD 210 includes a thin film transistor layer 211, the liquid crystal layer 212 disposed at an upper part of the thin film transistor layer 211, and a color filter layer 213 disposed at an upper part of the liquid crystal layer 212.

The window 230 performs a function of showing an image of the LCD 210 to a user while protecting the LCD 210 from the outside and is disposed at an upper part of the LCD 210. In the TSP LCD device 200, a TSP sensor pattern 231 including a TSP X sensor pattern 231a and a TSP Y sensor pattern 231b is formed in a lower surface of the window 230.

The shield layer 220 shields LCD noise generated in the LCD 210 and advancing toward the TSP sensor pattern 231. The shield layer 220 is disposed between the LCD 210 and the window 230. A lower surface of the shield layer 220 includes a film in which an Indium Tin Oxide (ITO) layer 221 is formed, and an Optically Clear Adhesive (OCA) 232 for attaching the shield layer 220 and the window 230 is located on an upper surface of the shield layer 220. The ITO layer 221 is formed above a top surface 240 of the LCD 210. Further, as shown in FIG. 6, a ground line 250, connected with a Flexible Printed Circuit Board (FPCB) bonding portion 222 of a touch screen FPCB 223, is located on a lower surface of the shield layer 220 to contact with the edge of the ITO layer 221. It is preferable that the ground line 250 is formed with a metal having a resistivity lower than that of the ITO layer 221. In an exemplary implementation, the ground line 250 is formed with silver. However, the ground line 250 may also include other materials having a resistance lower than that of the ITO layer 221, and need not necessarily include a metal.

According to an exemplary embodiment of the present invention, as shown in FIG. 6, the ground line 250, connected with the FPCB bonding portion 222, includes silver having a low resistivity and encloses the edge of the ITO layer 221 to contact with the ITO layer 221 of the shield layer 220. With this arrangement, the resistance from the FPCB bonding portion 222 to each of the four corners F, G, H, and I of the ITO layer 221 is substantially the same. Accordingly, because the ITO layer 221 is evenly grounded, an amplitude of LCD noise is lowered to ± 2V and an LCD noise shield function is improved, as shown in FIG. 7.

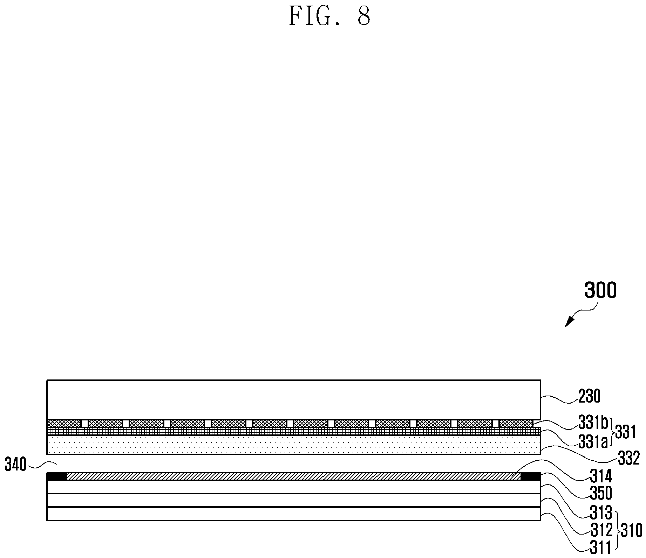

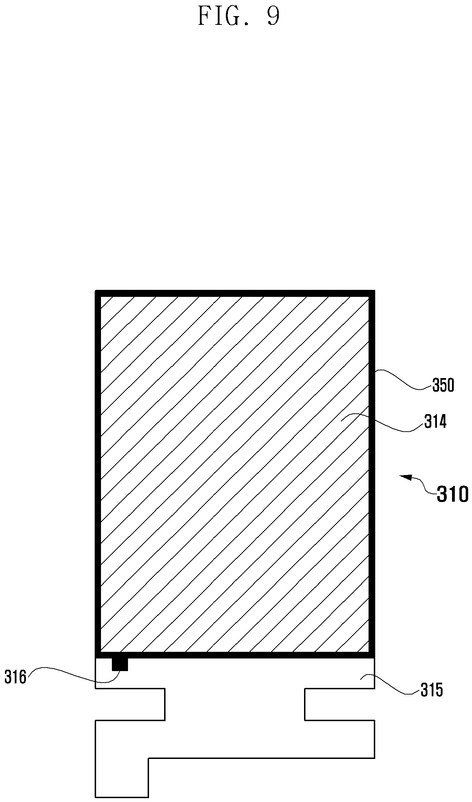

FIG. 8 is a cross-sectional view illustrating a TSP LCD device according to a second exemplary embodiment of the present invention taken along line A-A' of FIG. 4, and FIG. 9 is a plan view illustrating an LCD in the TSP LCD device of FIG. 8 according to an exemplary embodiment of the present invention.

Referring to FIGs. 4, 8 and 9, a TSP LCD device 300 includes a window 230 and an LCD 310.

A TSP sensor pattern 331 including a TSP X sensor pattern 331a and a TSP Y sensor pattern 331b is located on a lower surface of the window 230, similarly to the first exemplary embodiment. Further, in a lower part of the window 230, in order to prevent the TSP sensor pattern 331 from being exposed to an air gap 340, an OCA 332 is located to cover the TSP sensor pattern 331.

The LCD 310 is disposed at a lower part of the window 230 and includes a thin film transistor layer 311, a liquid crystal layer 312, and a color filter layer 313, similarly to the first exemplary embodiment. An ITO layer 314 for shielding ElectroStatic Discharge (ESD) is located on an upper surface of the color filter layer 313. Further, as shown in FIG. 9, a ground line 350, connected to an FPCB bonding portion 316 of an LCD FPCB 315, is located on an upper surface of the color filter layer 313 to contact with the edge of the ITO layer 314. In an exemplary implementation, the ground line 350 is formed with a metal having a resistivity lower than that of the ITO layer 314. For example, the ground line 350 may be formed with silver. However, as described above, this is merely for illustration and not to be considered limiting. Further, as a polarizing plate (not shown) located on an upper surface of the ITO layer 314 covers an upper surface of the ground line 350, the ground line 350 can be prevented from being corroded due to the air gap 340.

According to a second exemplary embodiment of the present invention, as shown in FIG. 9, the ground line 350, connected with the FPCB bonding portion 316, is formed with silver having a low resistivity and encloses the edge of the ITO layer 314 to contact with the ITO layer 314 of the color filter layer 313 and thus resistance from an FPCB bonding portion 316 to each point of the ITO layer 314 has substantially the same value. Accordingly, because the ITO layer 314 is evenly grounded, LCD noise can be shielded by the ITO layer 314 without a separate shield layer between the LCD 310 and the window 230, as shown in FIG. 8.

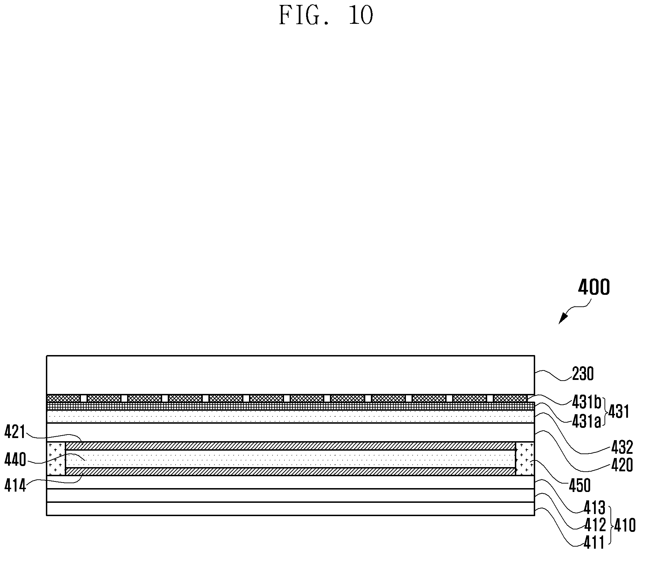

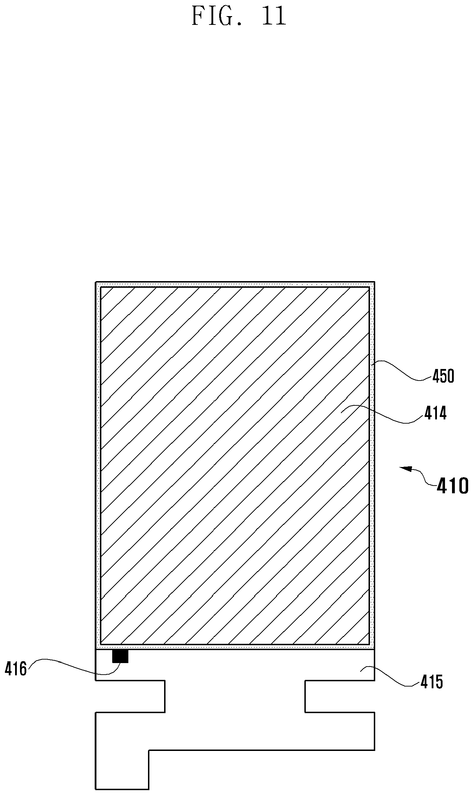

FIG. 10 is a cross-sectional view illustrating a TSP LCD device according to a third exemplary embodiment of the present invention taken along line A-A' of FIG. 4, and FIG. 11 is a plan view illustrating an LCD in the TSP LCD device of FIG. 10 according to an exemplary embodiment of the present invention.

Referring to FIGs. 4, 10, and 11, a TSP LCD device 400 according to a third exemplary embodiment of the present invention is described.

The TSP LCD device 400 includes an LCD 410, a window 230, a shield layer 420, and a ground dam 450.

The LCD 410 includes a thin film transistor layer 411, a liquid crystal layer 412, and a color filter layer 413 having a first ITO layer 414 for shielding ESD in an upper surface, similarly to the second exemplary embodiment. A TSP sensor pattern 431 including a TSP X sensor pattern 431a and a TSP Y sensor pattern 431b is formed in a lower surface of the window 230, similarly to the first exemplary embodiment, and the window 230 is disposed at an upper part of the color filter layer 413.

The shield layer 420 is disposed between the LCD 410 and the window 230, similarly to the first exemplary embodiment. The shield layer 420 is formed with a film having a second ITO layer 421 in a lower surface thereof, and an OCA 432 for attaching the shield layer 420 and the window 230 is located on an upper surface of the shield layer 420.

Further, as shown in FIGs. 10 and 11, the ground dam 450 is connected to an FPCB bonding portion 416 of an LCD FPCB 415. Also, the ground dam 450 is located between the color filter layer 413 and the shield layer 420 to contact with the edge of the ITO layer 414 located on the color filter layer 413 and the edge of the ITO layer 421 located on the shield layer 420. In an exemplary implementation, the ground dam 450 is formed with a conductive resin having a resistivity lower than that of the ITO layer 414 located on the color filter layer 413 and that of the ITO layer 421 located on the shield layer 420. For example, a conductive resin that includes silver powder may be used in order to have a low resistivity. Of course, it is to be understood that this is merely for example and not meant to limit the invention in any manner.

Referring again to the related art of FIG. 1, an air gap 140 exists between the LCD 110 and the shield layer 120 of the TSP LCD device 100. In this arrangement, a problem exists in that visibility is deteriorated by a refractive index difference due to the air gap 140. Therefore, in order to improve visibility, as shown in FIG. 10, a Super View Resin (SVR) operation of including an SVR 440 between the LCD 410 and the shield layer 420 is performed. By confining the SVR 440 therein while performing the SVR operation, the ground dam 450 performs a function of preventing the SVR 440 from flowing into a space between the LCD 410 and a backlight mold (not shown).

If implemented according to the related art, in order to connect the ITO layer 414 located on the color filter layer 413 to ground, a separate process of attaching a back chassis (not shown) grounded using a conductive tape (not shown) to the ITO layer 414, or of connecting the ITO layer 414 to the LCD FPCB 415 using silver dotting is necessary.

However, according to a third exemplary embodiment of the present invention, as shown in FIGs. 10 and 11, because the ground dam 450, grounded through the FPCB bonding portion 416, encloses the edge of the ITO layer 414 to contact with the ITO layer 414 located on the color filter layer 413, the ITO layer 414 of the LCD 410 can be connected to ground using an SVR operation for improving visibility without a separate process.

Further, because the ground dam 450 is formed with a conductive resin and encloses the edge of the ITO layer 421 to contact with the ITO layer 421 located on the shield layer 420, the ITO layer 421 of the shield layer 420 can be connected to ground without a separate process.

Further, because the ground dam 450 is formed with a conductive resin having a resistivity lower than that of the ITO layer 414 located on the color filter layer 413 and that of the ITO layer 421 located on the shield layer 420, the ITO layers 414 and 421 are evenly grounded and thus an LCD noise shield function can be improved.

According to exemplary embodiments of the present invention, as the TSP LCD device includes a ground line located along the edge to contact with an ITO layer located on a shield layer for grounding the ITO layer, a resistance value difference according to a position of the ITO layer can be minimized. Accordingly, an LCD noise shield function can be improved.

Further, as the TSP LCD device includes a ground line located on an upper surface of a color filter layer along the edge to contact with an ITO layer located on the color filter layer of an LCD for grounding the ITO layer, LCD noise can be shielded without a shield layer between the LCD and the window.

Still further, as the TSP LCD device includes a ground dam located between the color filter layer and the shield layer along the edge to contact with the ITO layer located on the color filter layer of the LCD and the ITO layer located on the shield layer for grounding the ITO layer located on the color filter layer and the ITO layer located on the shield layer, the ITO layer of the LCD can be connected to ground without a separate process. Further, because the ground dam and the ITO layer of the shield layer are naturally connected, the ITO layer of the shield layer can be connected to ground without a separate process.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A Touch Screen Panel (TSP) Liquid Crystal Display (LCD) device, the TSP LCD device comprising:
a window disposed at an upper part of an LCD;
one or more Indium Tin Oxide (ITO) layer disposed between the LCD and the window; and
a ground line, contacting the one or more ITO layer, located along an edge of the one or more ITO layer for grounding the one or more ITO layer.

2. The TSP LCD device of claim 1, wherein the ground line comprises a metal having a resistivity lower than that of the one or more ITO layer.

3. The TSP LCD device of claim 1, wherein the ground line comprises silver.

4. The TSP LCD device of claim 1, wherein the ground line is bonded to a touch screen Flexible Printed Circuit Board (FPCB) in order to ground the ground line.

5. The TSP LCD device of claim 1, further comprising a TSP sensor pattern located on a lower surface of the window.

6. The TSP LCD device of claim 1, wherein the ground line surrounds a periphery of the one or more ITO layer.

7. The TSP LCD device of claim 1, further comprising a shield layer having the one or more ITO layer.

8. The TSP LCD device of claim 1, wherein the LCD has a color filter layer in which the one or more ITO layer formed in an upper surface of the color filter layer, and
the ground line is located at an upper surface of the color filter layer.

9. The TSP LCD device of claim 1, wherein the one or more ITO layer consist of a first ITO layer and a second ITO layer,
the LCD has a color filter layer in which the first ITO layer is formed in an upper surface of the color filter,
the TSP LCD device further comprises a shield layer having the second ITO layer, and
the ground line is located between the color filter layer and the shield layer.

10. The TSP LCD device of claim 9, wherein the ground line comprises a conductive resin having a resistivity lower than that of the first ITO layer and that of the second ITO layer.

11. The TSP LCD device of claim 9, wherein the ground line is the ground dam confining an optical elastic resin therein in a Super View Resin (SVR) operation of filling the optical elastic resin between the LCD and the shield layer.
